# EUROPÄISCHE PATENTSCHRIFT

(11) **EP 2 800 887 B1**
(45) Veröffentlichungstag und Bekanntmachung des Hinweises auf die Patenterteilung: **18.04.2018**
(21) Anmeldenummer: 12810247.2
(22) Anmeldetag: 19.12.2012
(51) Int. Cl.: F02D 9/10, F16K 1/22

(54) **VENTILVORRICHTUNG FÜR EIN KRAFTFAHRZEUG**
VALVE DEVICE FOR A MOTOR VEHICLE
DISPOSITIF DE SOUPAPE POUR UN VÉHICULE AUTOMOBILE

(30) Priorität: 03.01.2012 DE 102012200054
(43) Veröffentlichungstag der Anmeldung: 12.11.2014
(73) Patentinhaber: Continental Automotive GmbH, 30165 Hannover (DE)
(72) Erfinder: KOHLEN, Peter, 61267 Neu Anspach (DE); MÖBS, Stefan, 35519 Rockenberg (DE); VON WILLICH, Joachim, 65618 Selters (DE)
(86) Internationale Anmeldenummer: PCT/EP2012/076209
(87) Internationale Veröffentlichungsnummer: WO 2013/102562

(56) Entgegenhaltungen:
- EP-A1- 2 177 797
- EP-A2- 0 708 232
- WO-A1-98/24671
- WO-A1-2011/108331
- DE-A1-102010 008 740
- US-A- 2 014 000
- US-A- 2 271 390
- US-A- 2 680 592
- US-A- 2 994 517
- US-A- 3 974 860
- US-A- 4 420 438

## Beschreibung

Gegenstand der Erfindung ist eine Ventilvorrichtung für ein Kraftfahrzeug mit einem Gehäuse einem in dem Gehäuse befindlichen Strömungskanal, einer in dem Strömungskanal angeordneten Klappe zum Verschließen des Strömungskanals, wobei die Klappe an einer Achse befestigt ist und die Achse drehbar in dem Gehäuse gelagert ist.

Derartige Ventilvorrichtungen finden beispielsweise als Drosselklappenstutzen Verwendung und sind seit langem bekannt. Durch die drehbar gelagerte Klappe ist es möglich den Strömungskanal vollständig zu verschließen, oder durch Drehung der Klappe um 90° den Strömungskanal derart zu öffnen, dass ein maximaler Massendurchsatz erfolgt. Dementsprechend ist die Ventilvorrichtung nach dem maximalen Massendurchsatz und damit nach dem freien Strömungsquerschnitt im Bereich der Klappe ausgelegt. Nachteilig hierbei ist, dass für verschiedene Anforderungen jeweils unterschiedliche Ventilvorrichtungen mit entsprechend gestalteten Gehäusen und den darin verlaufenden Strömungskanälen, insbesondere Strömungsquerschnitten, erforderlich sind. Die Gehäuse bestehen aus Metall oder Kunststoff und werden durch Gießen oder Spritzgießen hergestellt. Dementsprechend erfordert die Herstellung der Gehäuse eine ebenso große Anzahl unterschiedlicher Gießformen.

Ventilvorrichtungen dieser Art sind aus der US 2680592 A, US 4420438 A, EP 2177797 A1, US2014000 A, WO 98/24671 A1, US 2994517 A, DE 102010008740 A1, US 3974860 A, US 2271390 A und WO 2011108331 A1 bekannt.

Der Erfindung liegt die Aufgabe zugrunde, eine Ventilvorrichtung zu schaffen, mit der unterschiedliche maximale Massendurchsätze mit nur einem Strömungskanalquerschnitt zu realisieren.

Gelöst wird die Aufgabe dadurch, dass die Klappe auf zumindest einer Seite eine sphärische Erhebung in Form einer Halbkugel aufweist.

Die sphärische Erhebung bewirkt, dass bei vollständig geöffneter Klappe ein kleinerer Durchströmquerschnitt im Strömungskanals für den maximalen Massendurchsatz zur Verfügung steht als dies bei einer scheibenförmigen Klappe der Fall wäre. Der Einsatz der erfindungsgemäßen Klappe ermöglicht somit die Verwendung eines Gehäuses mit einem Strömungskanal, dessen Querschnitt nach einem maximalen Massendurchsatz beziehungsweise dem Durchströmquerschnitt ausgelegt ist. Die Anpassung der Ventilvorrichtung an den jeweiligen maximalen Massendurchsatz wird durch die Verwendung einer Klappe ermöglicht, indem durch eine gezielte Gestaltung der zumindest einen sphärischen Erhebung der Durchströmquerschnitt reduziert wird. Somit muss lediglich die Klappe gemäß den gewünschten Anforderungen angepasst werden, während die übrige Ventilvorrichtung unverändert für alle Anwendungsfälle genutzt werden kann. Als scheibenförmige Klappen werden dabei all die Klappen angesehen, die bis auf die Bereiche, in denen die Welle die Klappe durchdringt, scheibenförmig ausgebildet sind. Die Bereiche, in denen die Welle die Klappe durchdringt, müssen daher zwangsläufig von der ebenen, scheibenförmigen Gestalt abweichen, da diese Bereiche oftmals zum Befestigen der Klappe an der Welle dienen.

Besonders vorteilhaft haben sich halbkugelförmige Erhebungen in Form von Kugelkappen oder halbellipsoidförmige Erhebungen als sphärische Erhebungen erwiesen, da sie eine strömungsgünstige Form besitzen. Mit der Verwendung derartiger Formen lassen sich gleichzeitig Verwirbelungen beim Passieren der Klappe reduzieren, was den Strömungsfluss verbessert.

Eine besonders große Verringerung des maximalen Massendurchsatzes wird mit einer Klappe erreicht, die auf beiden Seiten eine sphärische Erhebung aufweist.

Einen symmetrischen Strömungsverlauf im Bereich der Klappe wird dadurch erreicht, dass die Höhen der beiden sphärischen Erhebungen zu beiden Seiten der Klappe gleich groß sind.

Es ist aber auch denkbar aus strömungstechnischen Gründen die Höhen der beiden sphärischen Erhebungen zu beiden Seiten der Klappe unterschiedlich zu gestalten.

In einer vorteilhaften Ausgestaltung ist die zumindest eine sphärische Erhebung eine Kugelkappe, wobei der Durchmesser der Kugelkappe auf der Klappe in einem Bereich liegt, der vom Radius der Klappe bis zum Durchmesser der Klappe reicht. Der Vorteil dieser Ausgestaltung besteht darin, dass man dadurch einen Strömungsquerschnitt erhält, der sich über den gesamten Umfang des Strömungskanals erstreckt.

In einer anderen Ausgestaltung ist die zumindest eine sphärische Erhebung eine halbellipsoidförmige Erhebung. Die Ausbildung als halbellipsoide Erhebung hat den Vorteil, dass durch eine entsprechende Ausrichtung der halbellipsoiden Erhebung der Durchströmquerschnitt auf der jeweiligen Seite der Klappe in weiten Grenzen variiert werden kann. In Abhängigkeit davon ob die längste Achse der halbellipsoiden Erhebung, welche immer in der Ebene der Klappe angeordnet ist, parallel oder senkrecht zur Welle ausgerichtet ist, bildet sich entweder zwei Hauptdurchströmquerschnitte nahe der Welle oder ein Durchströmquerschnitt in dem von der Welle entfernten Bereich des Strömungskanals aus. Neben der Ausrichtung der Achsen hat aber auch die Auswahl der Länge der Achsen entscheidenden Einfluss auf die Form und Größe des Durchströmquerschnitts.

Das Verbinden der Klappe mit der Welle mittels Laserschweißen gestaltet sich in einer vorteilhaften Ausgestaltung besonders einfach, wenn die sphärische Erhebung eine bis zur Welle reichende Ausnehmung aufweist.

In einer anderen Ausgestaltung erfolgt das Verbinden der Klappe mit der Welle durch Verschrauben. Diese Verbindungsart hat den Vorteil, dass die Ausnehmung für die Schraube kleiner als beim Laserschweißen ausgebildet sein kann und dass der Schraubenkopf die Ausnehmung nahezu vollständig ausfüllt. Das hat die Vorteile, dass der Schraubenkopf einerseits nicht in den Strömungsquerschnitt hineinragt, und dass andererseits eine Beeinflussung des Strömungsverhaltens durch die Ausnehmung minimiert wird.

Die Klappe kann gemäß einer weiteren Ausgestaltung für Anwendungen mit einer Temperaturbelastung bis zu 150°C aus Kunststoff bestehen, wodurch eine besonders leichte Klappe geschaffen wird. Bei höheren Temperaturen kommen Klappen aus Metall zum Einsatz.

Die erfindungsgemäße Klappe ist besonders einfach herzustellen, wenn sie aus einen Stück besteht.

In einer anderen Ausgestaltung besitzt die Klappe einen mehrteiligen Aufbau, indem zumindest eine sphärische Erhebung mit einem Klappengrundkörper verbunden ist. Diese Ausgestaltung hat den Vorteil, dass als Klappengrundkörper herkömmliche scheibenförmige Klappen verwendet werden können und lediglich die sphärischen Erhebungen nach Bedarf auf den jeweiligen Anwendungsfall montiert werden.

Das Verbinden der einzelnen Klappenbauteile kann durch Schweißen, Kleben oder Verschrauben erfolgen. Kostengünstig wirkt sich hierbei aus, wenn die Klappenbauteile beispielsweise durch Verschweißen oder Verschrauben gleichzeitig die Welle verbunden werden.

An mehreren Ausführungsbeispielen wird die Erfindung näher erläutert. Es zeigen in:
- Fig. 1: eine Ventilvorrichtung nach dem Stand der Technik im Schnitt,
- Fig. 2: die Ventilvorrichtung nach Figur 1 im Schnitt,
- Fig. 3: eine erfindungsgemäße Ventilvorrichtung im Schnitt,
- Fig. 4 - 7: weitere Ausführungsformen der Klappe.

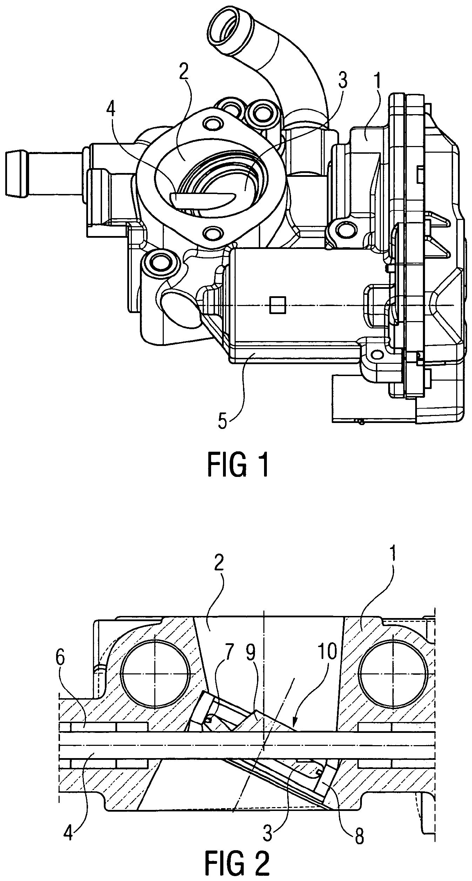

Figur 1 zeigt eine Ventilvorrichtung nach dem Stand der Technik mit einem Gehäuse 1, einem in dem Gehäuse befindlichen Strömungskanal 2, in dem eine scheibenförmige Klappe 3 angeordnet ist. Die Klappe 3 ist fest mit einer Welle 4 verbunden und die Welle 4 ist in dem Gehäuse 1 drehbar gelagert. Die Welle 4 wird von einem im Gehäuse angeordneten Elektromotor 5 angetrieben, wobei zwischen Welle 4 und Elektromotor 5 ein Getriebe zwischengeschaltet ist.

Figur 2 zeigt den Bereich des Strömungskanals 2 nach Figur 1 im Schnitt. Die Welle 4 ist über Buchsen 6 drehbar im Gehäuse 1 gelagert. An der Welle 4 ist die scheibenförmige Klappe 3 mittels einer Schweißverbindung drehfest befestigt. In der gezeigten Darstellung verschließt die Klappe 3 den Strömungskanal 2 vollständig. Die Abdichtung erfolgt dabei über einen Dichtring 7, der in einer Nut der Klappe 3 angeordnet ist. Der Dichtring 7 dichtet den Strömungskanal gegen die Innenwandung eines in den Strömungskanal 2 eingesetzten Rings 8 ab. Bei einer Drehung der Welle 4 öffnet die Klappe 3, indem sie einen Strömungsquerschnitt im Strömungskanal 2 freigibt, der mit zunehmender Drehung größer wird. Die scheibenförmige Klappe 3 besitzt auf einer Seite eine kegelstumpfförmige Erhebung 9. Die Erhebung 9 dient als Verstärkung der scheibenförmigen Klappe 3 in dem Bereich, in dem die Klappe 3 mit der Welle 4 verbunden ist. In diesem Ausführungsbeispiel sind die Klappe 3 und die Welle 4 miteinander verschweißt, wozu die Erhebung 9 eine bis zur Welle 4 reichende Ausnehmung 10 besitzt.

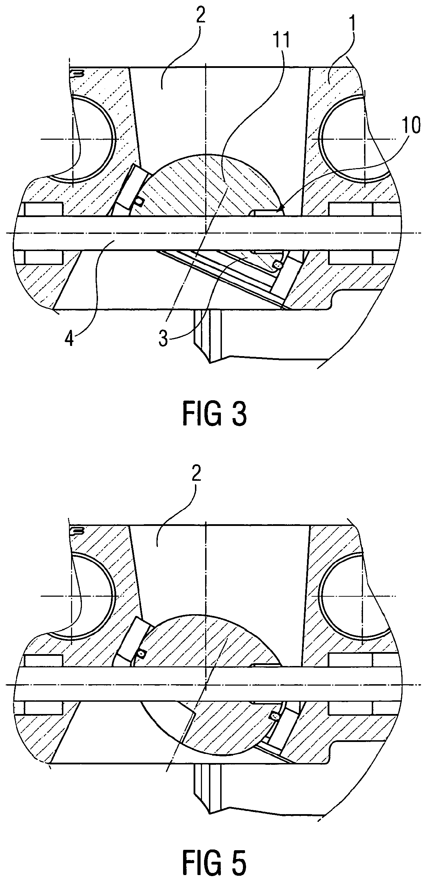

Die erfindungsgemäße Klappe 3 in Figur 3 besitzt auf einer Seite eine sphärische Erhebung in Form einer Kugelkappe 11, wobei die Kugelkappe 11 in diesem Fall eine Halbkugel ist. Die Kugelkappe 11 ist einteilig mit der Klappe 3 ausgebildet. Bezüglich ihrer Abmessungen ist die Kugelkappe 11 so gestaltet, dass ihr Durchmesser dem Durchmesser der Klappe 3 entspricht. Die Klappe 3 besitzt weiter eine bis zur Welle 4 reichende Ausnehmung 10, um die Klappe 3 mit der Welle 4 mittels Laserschweißen drehfest zu verbinden.

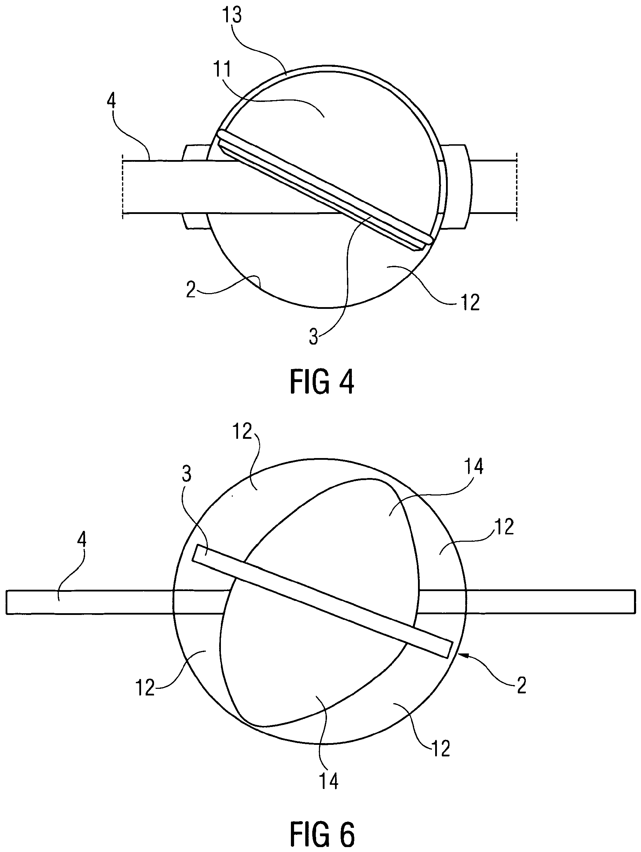

In der Figur 4 ist der Strömungskanal 2 mit der geöffneten Klappe 3 aus Figur 3 dargestellt. Infolge der Anordnung der Kugelkappe 11 wird der Durchströmungsquerschnitt 12 bei geöffneter Klappe 3 um nahezu die Hälfte gegenüber einer scheibenförmigen Klappe reduziert. Der auf der Seite der Kugelkappe 11 verbleibende schmale Spalt 13 zwischen Kugelkappe 11 und der Wandung des Strömungskanals 2 ergibt sich aus den unterschiedlichen Abmessungen des Dichtrings 7 und der Kugelkappe 11. Auf diese Weise erreicht wird mit einer relativ einfach gestalteten sphärischen Erhebung eine deutliche Reduzierung des Durchströmungsquerschnitts 12 erreicht.

Die nicht-erfindungsgemäße Klappe 3 in Figur 5 unterscheidet sich von der Klappe in Figur 3 dadurch, dass beide Seiten der Klappe 3 eine sphärische Erhebung aufweisen, welche die Form einer halbellipsoiden Erhebung 14 besitzen. Die längsten Achsen der halbellipsoiden Erhebungen 14 entsprechen in ihrer Länge dem Durchmesser der Klappe 3. Zudem sind die längsten Achsen derart zur Welle 4 ausgerichtet, dass sich Durchströmquerschnitte 12 in den von der Welle 4 entfernten Bereichen des Strömungskanals 2 ausbilden. Die halbellipsoiden Erhebungen 14 ermöglichen einen verbesserten Strömungsverlauf, da durch die Form der Erhebung Verwirbelungen beim Umströmen der Klappe 3 reduziert werden. Eine bis zur Welle 4 reichende Ausnehmung 10 ist auch hier vorgesehen, um die Klappe 3 mittels Schweißen drehfest mit der Welle 4 zu verbinden.

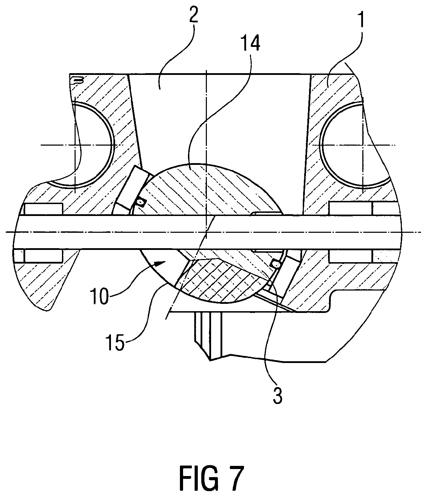

Figur 6 zeigt in schematischer Darstellung eine nichterfindungsgemäße Klappe 3 mit zu beiden Seiten angeordneten halbellipsoiden Erhebungen 14, die jedoch im Gegensatz zu Figur 5 mit ihrer längsten Achse senkrecht zur Welle 4 ausgerichtet sind. Auf diese Weise bilden sich auf jeder Seite der Klappe 3 zwei Durchströmquerschnitte 12 aus.
Darüber hinaus ist es auch möglich eine Klappe 3 mit unterschiedlichen sphärischen Erhebungen 11, 14 zu gestalten, indem auf einer Seite eine Kugelkappe und auf der anderen Seite eine halbeelipsoide Erhebung angeordnet ist. Neben der Form können auch die Abmessungen der jeweiligen sphärischen Erhebung unterschiedlich sein, indem der Durchmesser oder die längste Achse aus einem Bereich gewählt wird, der zwischen dem Radius und dem Durchmesser der Klappe 3 liegt. Während die Klappen 3 der Figuren 3 - 6 einteilig gestaltet sind, besitzt die Klappe 3 in Figur 7 einen mehrteiligen Aufbau. Die Klappe 3, welche ihrerseits bereits auf einer Seite eine sphärische Erhebung in Form einer halbellipsoiden Erhebung 14 besitzt, ist mit einer zweiten, separaten halbellipsoiden Erhebung 15 mittels Schweißen verbunden. Hierbei wird die Ausnehmung 10 gleichzeitig zum Verbinden der separaten Erhebung 14 mit der Klappe 3 genutzt. Durch diesen Aufbau wird der Einsatzbereich von Klappen mit nur einer sphärischen Erhebung ausgeweitet. Es ist aber auch denkbar, eine herkömmliche Klappe als Klappengrundkörper zu verwenden und diesen je nach Einsatz mit einer oder zwei separaten sphärischen Erhebungen zur fertigen Klappe zu verbinden.

## Patentansprüche

1. Ventilvorrichtung für ein Kraftfahrzeug mit einem Gehäuse (1) einem in dem Gehäuse (1) befindlichen Strömungskanal (2), einer in dem Strömungskanal (2) angeordneten Klappe (3) zum Verschließen des Strömungskanals (2), wobei die Klappe (3) Bereiche besitzt, in denen eine die Klappe (3) durchdringende Achse (4) befestigt ist, und die Achse (4) drehbar in dem Gehäuse (1) gelagert ist, **dadurch gekennzeichnet, dass** die Klappe (3) zumindest auf einer Seite eine sphärische Erhebung in Form einer Halbkugel aufweist.

2. Ventilvorrichtung nach Anspruch 1, **dadurch gekennzeichnet, dass** die Klappe (3) auf beiden Seiten eine sphärische Erhebung aufweist.

3. Ventilvorrichtung nach Anspruch 2, **dadurch gekennzeichnet, dass** die sphärischen Erhebungen gleich groß sind.

4. Ventilvorrichtung nach Anspruch 2, **dadurch gekennzeichnet, dass** die sphärischen Erhebungen unterschiedlich sind.

5. Ventilvorrichtung nach einem der vorhergehenden Ansprüche, **dadurch gekennzeichnet, dass** sich die zumindest eine sphärische Erhebung mit ihrer längsten Achse über mindestens die Hälfte des Durchmessers der Klappe(3), vorzugsweise dreiviertel der Klappe (3) und insbesondere über die gesamte Klappe (3) erstreckt.

6. Ventilvorrichtung nach einem der vorhergehenden Ansprüche, **dadurch gekennzeichnet, dass** zumindest eine sphärische Erhebung eine bis zur Welle (4) reichende Ausnehmung besitzt und die Klappe (3) mit der Welle (4) verschweißt, vorzugsweise mittels Laserschweißen verbunden ist.

7. Ventilvorrichtung nach einem der vorhergehenden Ansprüche 1 bis 6, **dadurch gekennzeich**n e t , dass die Klappe (3) mit der Welle (4) mittels einer Schraubverbindung verbunden ist.

8. Ventilvorrichtung nach einem der vorhergehenden Ansprüche, **dadurch gekennzeichnet, dass** zumindest eine sphärische Erhebung einstückig mit der Klappe (3) ausgebildet ist.

9. Ventilvorrichtung nach einem der vorhergehenden Ansprüche 1 bis 8, **dadurch gekennzeich**n e t , dass zumindest eine sphärische Erhebung ein separates Bauteil ist, welches mit der Klappe (3) verbunden ist.

## Claims

1. Valve device for a motor vehicle, having a housing (1), a flow channel (2) located in the housing (1), and a flap (3) arranged in the flow channel (2) for closing the flow channel (2), wherein the flap (3) has regions in which a shaft (4) penetrating the flap (3) is fastened, and the shaft (4) is rotatably supported in the housing (1), **characterized in that** the flap (3) has a spherical elevation in the form of a hemisphere at least on one side.

2. Valve device according to Claim 1, **characterized in that** the flap (3) has a spherical elevation on both sides.

3. Valve device according to Claim 2, **characterized in that** the spherical elevations are of the same size.

4. Valve device according to Claim 2, **characterized in that** the spherical elevations are different.

5. Valve device according to one of the preceding claims, **characterized in that** the longest axis of the at least one spherical elevation extends over at least half the diameter of the flap (3), preferably three quarters of the flap (3) and, in particular, over the entire flap (3).

6. Valve device according to one of the preceding claims, **characterized in that** at least one spherical elevation has a recess extending as far as the shaft (4), and the flap (3) is welded to the shaft (4), preferably by means of laser welding.

7. Valve device according to one of preceding Claims 1 to 6, **characterized in that** the flap (3) is connected to the shaft (4) by means of a screwed joint.

8. Valve device according to one of the preceding claims, **characterized in that** at least one spherical elevation is formed integrally with the flap (3).

9. Valve device according to one of preceding Claims 1 to 8, **characterized in that** at least one spherical elevation is a separate component, which is connected to the flap (3).

## Revendications

1. Dispositif de soupape pour un véhicule automobile avec un boîtier (1), un canal d'écoulement (2) se trouvant dans le boîtier (1), un clapet (3) disposé dans le canal d'écoulement (2) pour fermer le canal d'écoulement (2), dans lequel le clapet (3) comporte des zones dans lesquelles un axe (4) traversant le clapet (3) est fixé, et l'axe (4) est monté de façon rotative dans le boîtier (1), **caractérisé en ce que** le clapet (3) présente au moins sur un côté un renflement sphérique en forme de demi-sphère.

2. Dispositif de soupape selon la revendication 1, **caractérisé en ce que** le clapet (3) présente un renflement sphérique sur les deux côtés.

3. Dispositif de soupape selon la revendication 2, **caractérisé en ce que** les renflements sphériques sont de la même grosseur.

4. Dispositif de soupape selon la revendication 2, **caractérisé en ce que** les renflements sphériques sont différents.

5. Dispositif de soupape selon l'une quelconque des revendications précédentes, **caractérisé en ce que** ledit au moins un renflement sphérique s'étend avec son axe le plus long sur au moins la moitié du diamètre du clapet (3), de préférence sur les trois quarts du clapet (3) et en particulier sur tout le clapet (3).

6. Dispositif de soupape selon l'une quelconque des revendications précédentes, **caractérisé en ce qu'**au moins un renflement sphérique comporte un évidement s'étendant jusqu'à l'arbre (4) et le clapet (3) est soudé à l'arbre (4), de préférence assemblé par soudage au laser.

7. Dispositif de soupape selon l'une quelconque des revendications précédentes 1 à 6, **caractérisé en ce que** le clapet (3) est assemblé à l'arbre (4) au moyen d'un assemblage vissé.

8. Dispositif de soupape selon l'une quelconque des revendications précédentes, **caractérisé en ce qu'**au moins un renflement sphérique est formé d'une seule pièce avec le clapet (3).

9. Dispositif de soupape selon l'une quelconque des revendications précédentes 1 à 8, **caractérisé en ce qu'**au moins un renflement sphérique est un composant séparé, qui est assemblé au clapet (3).
